# EUROPEAN PATENT APPLICATION

(11) **EP 2 143 672 A1**
(43) Date of publication of application: **13.01.2010**
(21) Application number: 09009062.2
(22) Date of filing: 10.07.2009
(51) Int. Cl.: B65G 47/24, B65G 41/00

(54) **System and method for transport of bulk material**

(30) Priority: 10.07.2008 DK 200800971
(71) Applicant: Engbakken Holding ApS, 5550 Langeskov (DK)
(72) Inventor: Albæk, Michael, 5550 Langeskov (DK)
(74) Representative: Olesen, Kaj

(57) **Abstract**

The invention relates to a system 1 and a method for transport of supplementing material 2 such as top-dressing material, filling material, smoothing material or the like on a ground surface area A from a material carrier 3 for carrying and supplying said supplementing material 2, to a material distributing unit 4 such as a topdressing unit for distributing said supplementing material 2 on at least a part of said ground surface area A, where said system 1 comprises a conveying unit 5 for receiving supplementing material from said material carrier 3, said conveying unit 5 comprising a conveying part 6 comprising conveying means 7, wherein said conveying part 6 can be arranged in an inclining angle α1 in relation to the horizontal plane to transport said supplementing material 2 in an inclining angle α1 in relation to the horizontal plane to supply said supplementing material 2 to said material distributing unit 4.

## Description

### Background of the invention

Outdoor (and in some cases indoor) ground surface areas such as sports areas, park areas and the like has to be maintained to assure a good quality of the areas and to extend the durability of the areas.

An effective method of maintaining these areas is to top-dress the areas with loose supplementing material such as soil, fertilizers, wood chips, seed for maintaining worn plant growth on ground surface areas, industry grass such as rolling grass, stone meal, artificial material for topdressing artificial areas such as artificial grass fields, and the like as well as combinations thereof.

A known method of spreading this material is by means of airplanes, which however is a very expensive and imprecise way of supplying the supplementing material to ground surface areas.

Another known method is to supply/distribute the supplementing material to the areas by means of one or more tractors or other heavy vehicles driving up and down of the ground surface areas distributing the supplementing material, until sufficient supplementing material to the area(s) has been achieved. This method however suffer from a significant drawback in that the supplementing material to be supplied to the storage of the heavy vehicle is unloaded on the ground surface area and is subsequently supplied, e.g. means of a excavator or the like, to the storage of the heavy vehicle for distributing the supplementing material. This may cause severe damage to the ground surface area due to the excavator driving several times at the same location of the ground surface area to load the supplementing material to the distributing vehicle, due to that the bucket of the excavator may make scraping marks in the ground surface, and/or due to the fact that the remaining supplementing material unloaded on the area would be hard and time consuming to remove after the necessary supplementing material has been supplied to the area. Likewise, this method is extremely dependent of the weather in that a soft surface area due to rain and/or the geology would be even more vulnerable to heavy vehicles, and further the above mentioned method increases waste of supplementing material.

It is therefore an object of the invention to reduce or even avoid the above mentioned drawbacks such as to reduce damages and wear of the ground surface area during applying supplementing material to the ground surface area.

### The invention

The invention relates to a system for transport of supplementing material such as top-dressing material, filling material, smoothing material or the like on a ground surface area from a material carrier for carrying and supplying said supplementing material, to a material distributing unit such as a topdressing unit for distributing said supplementing material on at least a part of said ground surface area, where said system comprises a conveying unit for receiving supplementing material from said material carrier, said conveying unit comprising:
a conveying part comprising conveying means, wherein said conveying part can be arranged in an inclining angle in relation to the horizontal plane to transport said supplementing material in an inclining angle in relation to the horizontal plane to supply said supplementing material to said material distributing unit.

The system hereby spares the ground surface area since the supplementing material is not loaded directly on the ground surface. Further, an excavator (and a person for driving it) is spared which significantly brings down the fuel consumption during the material distribution. In some cases the present invention may bring down the fuel consumption to only one sixth of the fuel consumption during conventional methods of distributing supplementing material as mentioned above.

Likewise, the use of an excavator for loading the supplementing material into the material distributing unit is very time consuming, and use of the conveying unit may facilitate that the consumed time for distributing the supplementing may be reduced by half or even to a quarter of the time consumed by conventional methods of distributing supplementing material.

Thus, a cost efficient and environmental friendly solution is provided.

Still further, the ground surface area is not damaged by the now unnecessary loading vehicle such as an excavator.

By the term "supplementing material" is to be understood supplementing material such as e.g. soil, fertilizers, wood chips, seed for maintaining plant growing on worn ground surface areas such as sports areas, it may be stone meal, artificial material for topdressing artificial areas such as artificial grass fields and the like as well as combinations thereof.

Further, by the term "ground surface area" is to be understood areas such as e.g. (outdoor and/or indoor) sports areas such as golf fields, soccer fields, stone meal areas, areas with industry grass such as rolling grass for selling, park areas and the like.

In an aspect of the invention, the conveying unit is configured to be an individual conveying unit, possibly comprising drive means to move said conveying unit on said ground surface area.

This facilitates that the material carrier may bring further material to the location while the individual conveying unit may stay at the location and e.g. store supplementing material for the material distributing device, hereby facilitating a faster and more effective distribution of supplementing material.

In an aspect of the invention, the conveying unit is arranged on said material distributing unit or on said material carrier.

This facilitates that the conveying unit is automatically transported to the relevant locations.

It is generally understood that the conveying unit may be at least partly controllable by one or more wired or wireless remote controls, e.g. to facilitate that the driver in the material distributing unit may control the conveying means of the conveying unit to control the filling/loading of the storage of the material distributing unit. Likewise the remote control may facilitate control of the movement of the conveying unit.

In a preferred aspect of the invention, the conveying unit comprises a bottom frame supporting said conveying unit, said bottom frame being configured for being lowered to support on said ground surface area when said conveying unit is arranged to transport said supplementing material, and

wherein said bottom frame and/or said conveying part comprises inclination adjustment means for adjusting said inclining angle of said conveying part in relation to the horizontal plane.

This facilitates a more even distribution of the weight of the conveying unit, hereby further protecting the ground surface area. Likewise, it facilitates that the conveying unit is arranged low enough to assure that the material carrier can place its storage above the conveying part to assure safe loading of the supplementing material to the conveying unit. Likewise, the adjustment of the inclination of the conveying part facilitates that it may be adapted to various types of material distributing units and that the conveying may be arranged to be e.g. substantially horizontal during transport of the conveying unit, to assure safe and easy transport of the conveying unit e.g. on public roads, under bridges and the like.

In a preferred aspect of the invention, the conveying unit comprises a supply unit for receiving said supplementing material from said material carrier, which supply unit comprises further conveying means, said supply unit being configured for feeding said supplementing material to said conveying part, and

wherein said supply unit is configured for facilitating an intermediate storage of said supplementing material.

This is advantageous in that additional supplementing material can be temporarily stored on the conveying unit e.g. facilitating that the material carrier may bring in further supplementing material while it is assured that the material distributing unit does not run out of supplementing material at the location of the ground surface areas which is applied with supplementing material.

In an aspect of the invention, the supply unit is configured for being arranged with an inclining angle less than said angle of said conveying part.

This is advantageous in that the material carrier safely can load more material on the conveying unit since the less angle of the supply unit prevents the supplementing material from sliding from the conveying unit down on the ground surface area, and at the same time the larger angle of the conveying part assures the needed inclination to assure safe unloading of supplementing material to the material distributing device without making the conveying part too long to be transported e.g. on public roads.

In an aspect of the invention, the supply unit is arranged together with said conveying part and is configured to be arranged substantially parallel with and/or above of said conveying part during transport of said conveying unit.

This is advantageous during transportation of the conveying unit since it limits the length of the conveying unit.

In an aspect of the invention, the conveying unit comprises wheels to carry said conveying unit at least during transportation of said conveying unit.

The wheels facilitate easy transport of the conveying unit.

In an aspect of the invention, the conveying part is foldable, comprises drive means, and/or comprises conveyer cleaning means.

The foldable feature of the conveying part may make the conveying part and hereby the conveying unit more space saving during transport. The drive means (e.g. comprising an engine, a generator for fuel such as diesel and/or the like) facilitates that the conveying means of the conveying part and/or the supply unit may be operated without the need of an external power supply/drive means.

Further, the conveyer cleaning means facilitates that less supplementing material is unintentionally dropped on the ground surface area, and it may make the conveyer unit more reliable and effective.

The invention also relates to a method of applying supplementing material such as top-dressing material, filling material, smoothing material or the like on a ground surface area by means of a conveying unit, said method comprising the steps of:
providing a material carrier and a conveying unit comprising at least one conveying part, said at least one conveying part comprising conveying means,
supplying said supplementing material from said material carrier to said conveying unit, and
conveying said supplementing material from said material carrier by means of said conveying means of the conveying part to a material distributing unit for distributing said supplementing material to said ground surface area.

Hereby a cost efficient and environmental friendly method of applying supplementing material on a ground surface area, which further is gentle to the ground surface area, is achieved.

In an aspect of the method according to the invention, the step of supplying said supplementing material from said material carrier to said conveying unit comprises the step of loading said supplementing material on a supply unit comprising further conveying means, from which said supplementing material is conveyed to said conveying part.

Hereby a cost efficient, gentle and effective method of supplying material to the ground surface area is achieved.

In an aspect of the method according to the invention, the supply unit serves as an intermediate storage of said supplementing material.

The intermediate storage facilitates that a larger amount of supplementing material can be loaded on the conveying unit, hereby e.g. achieving that the material carrier may bring further material to the location while the material distributing unit can still be loaded/filled with the material on the conveying unit.

In an aspect of the method according to the invention, the supply unit is arranged substantially parallel with and/or on top of said conveying part during transportation of said conveying unit.

This is a space-saving feature which is advantageous during transportation of the conveying unit.

In an aspect of the method according to the invention, the conveying unit in a prior step is lowered, e.g. to support on the ground such as on said area, for example by displacing one or more wheels carrying said conveying unit at least during transportation of said conveying unit.

This facilitates that the conveying part and/or the supply unit is arranged in a suitable height in relation to the material carrier, and at the same time the weight of the conveying unit may be distributed to a larger area, hereby protecting the ground surface area against damages/marks.

In an aspect of the method according to the invention, the conveying part is arranged in an inclining angle in relation to the horizontal plane.

This e.g. facilitates that the conveying unit may be more space saving during transport and at the same time may load supplementing material to storage(s) of material distributing units arranged high over the ground.

### Figures of preferred embodiments

The invention will be described in the following with reference to the figures in which:
- fig. 1: illustrates an embodiment of the invention seen from the side,
- fig. 1a: illustrates an embodiment of the invention wherein the conveying unit comprises conveyer cleaning means,
- fig. 1b: illustrates an embodiment of the conveying part of the conveying unit seen from the front,
- fig. 1c: illustrates an embodiment of the conveying unit seen from above where the conveying means comprises cleated conveyer means,
- fig. 1d: illustrates an embodiment of the conveying unit wherein cleats of the conveying means are arranged to be substantially perpendicular to the horizontal plane when the conveying part (and/or supply unit) is arranged in an inclining angle to transport supplementing material,
- fig. 2a: illustrates an embodiment of the conveying unit arranged to be transported,
- fig. 2b: illustrates another embodiment of the conveying unit arranged to be transported,
- fig. 3: illustrates an embodiment of the conveying unit comprising a supply unit which is wider than the conveying part of the supply unit,
- fig. 4: illustrates an embodiment of the invention wherein the conveying part is foldable, and
- fig. 5a and 5b: illustrates an example of control of the system according to the invention.

### Detailed description of preferred embodiments

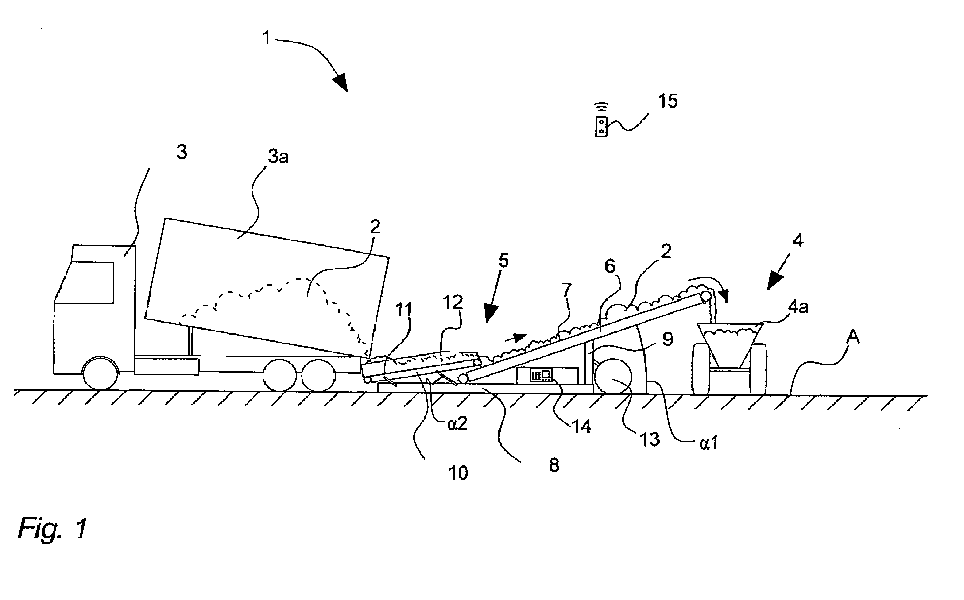

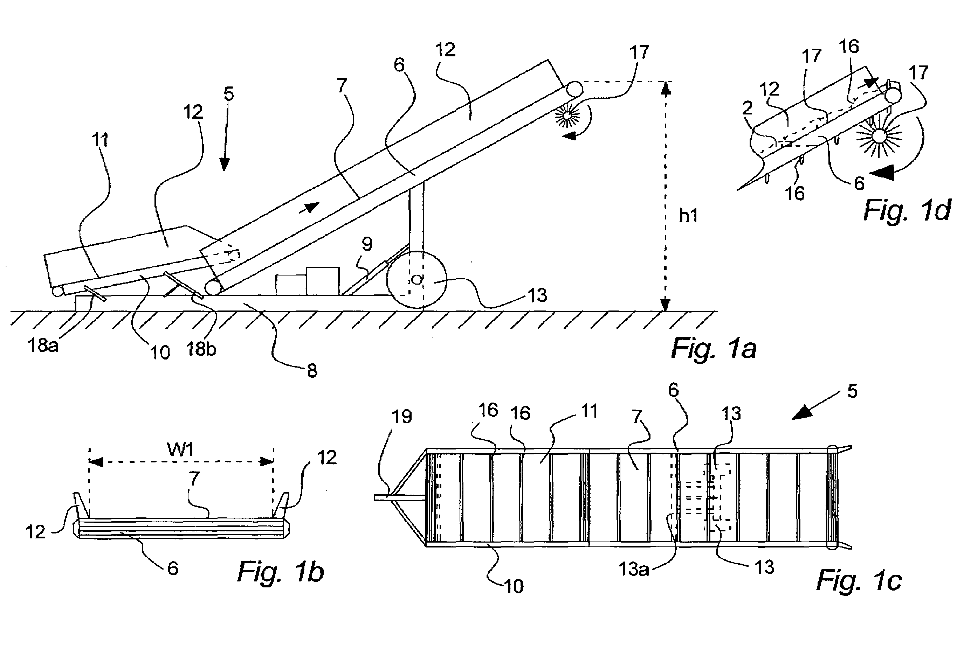

Fig. 1 illustrates a system 1 for transportation of supplementing material 2 according to a preferred embodiment of the invention. The system 1 comprises a material carrier 3 comprising a storage compartment 3a for carrying supplementing material 2 and for supplying the supplementing material to a conveying unit 5. The system 1 further comprises a conveying unit 5 comprising a conveying part 6 comprising conveying means 7 such as a conveying belt, e.g. a chain belt, a belt conveyer, it may be a plurality of units comprising cavities, it may comprise one or more screw conveyers, or any other conveying means known to a person skilled in the art.

The conveying means 7 of the conveying part 6 transports the supplementing material 2 from the material carrier 3 to a storage compartment 4a of a material distributing unit 4 for distributing the supplementing material 2 onto a ground surface area A. The material distributing unit 4 may also in the following be referred to as topdressing unit 4. It is understood that the material distributing unit 4 may comprise one, two, three or even more storage compartments 4a and that the material distributing unit 4 may comprise means for shifting between these different storage compartments and/or means for mixing the supplementing material of these storage compartments to achieve a more optimal mixture of supplementing material 2.

As illustrated, the conveying part 6 of the conveying unit 5 is configured to be arranged in an angle α1, preferably between 0° and 80° such as between 20° and 80°, e.g. substantially 30° in relation to the horizontal plane, and facilitates that the supplementing material 2 can be transported from a low location to a high location, in this case to the opening in the storage compartment 4a of the topdressing unit 4 which is intended for inlet of the supplementing material 2 to be distributed to the ground surface area A.

In a preferred embodiment of the invention, the conveying means 7 of the conveying part 6 and/or the supply unit 10 (which is explained in more details later on) comprises cleated conveyers, see e.g. fig. 1c. By the term "cleated conveyers" is to be understood conveyers comprising parts/pieces (cleats) 16 projecting from the conveying means 7, 11, e.g. substantially perpendicular to or in an angle e.g. between 30° and 85° such as between 50 and 75° to the transportation direction of the conveying means 7. In an embodiment of the invention, the cleats 16 are arranged in an angle to extend substantially perpendicular to the horizontal plane (se fig. 1d), when the conveying part 6 is arranged in the angle α1 to the horizontal plane. In general, such cleated conveyer means 7, 11 are advantageous in that they can help to increase the amount of material the conveying means 7, 11 is capable of transporting when arranged in an inclining angle α1, α2, and may facilitate that the conveying means 7, 11 may be arranged in a steeper angle α1, α2 without the supplementing material 2 sliding away from the conveying part 6.

It is preferred that the conveying unit 5 comprises inclination adjustment means 9 for adjusting the inclining angle α1 of the conveying part 6. This is advantageous in relation to adjustment of the angle α1 of the conveying part 6 to fit to the height of the inlet of the storage compartment 4a of the material distributing unit 4. Further, the inclination adjustment means 9 may adjust the angle α1 of the conveying part 6 to e.g. substantially 0°, e.g. when the conveying unit 5 is intended for transport to another location, to assure more safe and easy transport of the conveying unit 5 on public roads (which normally have a allowed maximum height of vehicles of e.g. 3.5 meters or the like), under bridges, through tunnels, on ferries and the like. The inclination adjustment means 9 may comprise one or more linear (e.g. hydraulic and/or pneumatic) actuators, it may comprise chains and toothed wheels, engines, belts, a crank handle for manual angle adjustment and the like or any other means or combinations of means suitable for altering the angle α1 of the conveying part 6.

An example of the performance of a hydraulics system of the conveying unit 5 may be a hydraulic system comprising combustion engine (e.g. a 40-70kW such as e.g. an 60 kW diesel engine), at least one hydraulic pump, one or more hydraulic engines such as e.g. four hydraulic engines, one or more hydraulic valve(s) and, hydraulic storage means (e.g. for storing 200-500 litre of hydraulic fluid), safety means, one or more hydraulic cylinders/actuators such as (e.g. the inclination adjusting means) and the like. It is of cause understood that a hydraulic system of the conveying unit 5 may comprise any necessary/advantageous parts and may be connected/ carried out in any suitable way known to a person skilled in the art.

In a preferred embodiment of the invention, the conveying unit comprises wheels 13 configured to carry the conveying unit 5 at least during transportation of the conveying unit (5).

In a preferred embodiment of the invention, the conveying unit 5 is an individual conveying unit 5 which may be transported from one location to another e.g. as a trailer comprising a draw bar 19 (e.g. illustrated in fig. 1c) connected to a tow bar of a heavy vehicle (e.g. a car, a truck, a tractor or the like). In the embodiment of the individual conveying unit, the conveying unit 5 may comprise drive means (not illustrated) such as one or more electric engines, a combustion engine or the like, configured to move the conveying unit 5 on said ground surface area (A) and/or other surface areas (roads or the like).

It is of cause understood that in other embodiments of the invention, the individual conveying unit 5 may comprise a driver's cab for a driver and all necessary means such as e.g. a steering wheel, engine, transmission (automatic or manual), at least two sets of wheels, speeder, brakes, clutch and any other means so that the individual conveying unit 5 may be considered as an independent vehicle, preferably complying with any demands to vehicles allowed for driving on public roads.

It is preferred that the conveying unit 5 at least in the individual configuration of the conveying unit 5 is at least partly self-sufficient with energy/power e.g. by comprising one or more combustion engines, a generator generating energy for the electrical system (and hydraulic system if present) of the conveying unit 5, for driving electrical drive means (e.g. engines) if present. It is likewise understood that the conveying unit 5 may comprise energy storage means such as one or more batteries or the like. In other embodiments of the invention, the conveying unit 5 may be supplied with energy/power from other locations, e.g. from a vehicle, an external generator or the like.

In another embodiment of the invention, the conveying unit 5 is arranged on the material distributing unit 4 or on said material carrier 3 (not illustrated) which may further spare the ground surface area A.

In a further embodiment of the invention, the conveying unit 5 comprises a supply unit 10 as mentioned above, arranged at the lower part of the conveying part 6.

By the term "lower part of the conveying part 6" is to be understood the lower part of the conveying part 6 when the conveying part 6 is arranged to convey/transport supplementing material 2 in the mentioned angle α1 to the horizontal plane, such as substantially at the area of the conveying unit 5 where the supplementing material 2 is loaded by the material carrier 3 to be conveyed to the material distributing unit 4, e.g. by tilting the storage compartment 3a of the material carrier 3. The tilting of the storage compartment 3 may be performed by hydraulic tilting means which are present in a major number of conventional trucks which may be used as material carriers 3.

The supply unit 10 comprises further conveying means 11 such as conveying belts, e.g. a chain belt, belt conveyer(s), cleated conveyer(s), it may be a plurality of units comprising cavities, it may comprise one or more screw conveyers, or any other conveying means known to a person skilled in the art. The supply unit 10 may, as the conveying part 6, be arranged in an inclining angle α2 in relation to the horizontal plane. This inclining supply unit angle α2 is preferably an angle less than the inclining angle α1 of the conveying part 6, to facilitate an advantageous angle/height of the supply unit 10, hereby achieving that the supplementing material 2 does not slide away from the further conveying means 11, and that the height of the supply unit 10 facilitates that the material carrier 3 may load the supplementing material 2 directly onto the further conveying means 11. The angle α2 in which the supply unit 10 may be arranged at least when arranged to transport the supplementing material 2 may be between 0 and 50° in relation to the horizontal plane, such as between 5° and 30°, e.g. 12°.

It is further preferred that the supply unit 10 is configured to facilitate intermediate storage of the supplementing material 2. This is advantageous in that the capacity of supplementing material 2 of the conveying unit 5 may be increased significantly, e.g. facilitating that the material carrier 3 may bring in further material 2 without risking that the material distributing unit 4 run out of supplementing material 2.

It is understood that the conveying unit 5 may likewise comprise inclination adjustment means (not illustrated) for adjusting the angle of the supply unit 10.

In a preferred embodiment of the invention, the conveying means 7 of the conveying part 6, and the further conveying means 11 of the supply unit 10 are controllable independently of each other to facilitate a more controlled flow of the supplementing material 2. The conveying means 7, 11 may e.g. be controlled based on one or more flow measuring means such as one or more flowmeters facilitating measurements of the flow of the supplementing material 2 on the conveying part 6 and/or the supply unit 10.

The speed of the conveying means 7 of the conveying part 6, and the further conveying means 11 of the supply unit 10 may in an embodiment of the invention be between 0.5 and 6 m/s such as between 1 and 3 m/s, e.g. 2 m/s, and may preferably be controlled automatically /and or manually to vary dependent of the flow measured by the flow measuring means or a speed wished by an operator operating the conveying unit 5.

In an embodiment of the invention, the conveying capacity of the conveying unit facilitates transportation of at least 3 tons of supplementing material per minute, such as at least 6 tons of supplementing material per minute, e.g. at least 8 tons of supplementing material per minute.

It is of cause understood that the conveying means 7 and/or further conveying means 11 are driven by conveyer drive means (not illustrated) to facilitate transportation of the supplementing material 2 by means of the conveying means 7 and/or further conveying means 11. These drive means may comprise one or more electrical engines and/or combustion engines, it may comprise chains and toothed wheels, it may comprise toothed wheels configured for interacting with a plurality of protrusions in the conveying means, it may comprise hydraulic means or any combination thereof. It is in general understood that the conveyer drive means may comprise any drive means suitable for driving the conveyer means 7, 11, known to a person skilled in the art. An example of the power of conveyer drive means may e.g. be above 2 kW such as above 5 kW, e.g. above 10 kW such as 11 kW.

In an embodiment of the invention, the conveying unit 5 comprises a bottom frame 8 to support the conveying unit 5 comprising the conveying part 6, drive means (e.g. if the conveying unit 5 is an individual conveying unit), the supply unit 10 and the like.

In a preferred embodiment of the invention, the bottom frame 8 may be lowered to support on the ground surface area A when the conveying unit 5 is to be arranged to transport the supplementing material 2 to the storage compartment(s) 4a of the topdressing unit 4, e.g. as illustrated in fig. 1 and 1a. This facilitates that the weight of the conveying unit 5 and the supplementing material 2 on the conveying unit 5 is distributed over a larger area of the ground surface area A, thereby sparing the ground surface area A. Likewise, it is an efficient way to assure that the conveying part 6 or supply unit 10 may be arranged low enough to facilitate that the material carrier 3 may load the supplementing material directly onto the supply unit 10 (or conveying part 6 if the conveying unit does not comprise a supply unit 10).

The bottom frame 8 (and hereby the comprising conveying part 6, drive means, supply unit 10 and the like) may in an embodiment of the invention be lowered to support on the ground such as on the ground surface area A by at least vertically displacing one or more of the wheels 13 carrying the conveying unit 5, e.g. by hydraulically or electrically pivoting the wheels 13 (and e.g. a wheel supporting structure 13a at least comprising the shaft as illustrated in fig. 1c) around an substantial horizontal axis (not illustrated). The displacement of the conveying unit 5 may be achieved by means of wheel adjustment means (not illustrated) such as one or more linear actuators, engines, chains and toothed wheels or the like. In another embodiment of the invention, the bottom frame 8 is lowered without displacing the wheels 13 by displacing the bottom frame 8 by means of e.g. hydraulic bottom frame displacement means (not illustrated in any figures).

In an embodiment of the invention, the inclination adjustment means 9 for adjusting the inclining angle α1 of the conveying part 6 may also facilitate that the wheels 13 is/are displaced so that the displacement of the wheels 13 to lower the bottom frame 8 automatically facilitates an at least partly increase of the inclining angle α1 of the conveying part 6.

The conveying unit 5 preferably comprises control means 14 such as electric and/or hydraulic control means for controlling the inclining angles α1 and/or α2 of the conveying part 6 and/or supply unit 10, the conveying means 7, the further conveying means 11, drive means for moving the conveying unit 5, controlling safety measures of the conveying unit, lowering/lifting of the bottom frame 8 / the conveying unit 5 onto and away from the ground surface area A, displacement of wheels 3, and any other function which may be advantageous to control by such control means 14. The control means 14 may comprise one or more buttons, touch screens and/or the like to control one or more of these functions, and may comprise one or more displays for monitoring these functions and/or safety measures. The control means 14 may likewise comprise one or more wired or wireless remote controls 15 (e.g. controllable by the driver(s) of e.g. the material distributing unit(s) 4) for accessing/controlling at least some of the above mentioned functions, e.g. start/stop of the conveying means 7 and/or the further conveying means 11 to load the storage compartment 4a of the material distributing unit(s). It is preferred that wireless remote control(s) 15 can control the conveying unit from a distance of at least 5 meters, such as at least 20 meters, e.g. at least 30 meters from the conveying unit 5.

Preferably, the supply unit 10 and/or conveying part 6 comprises side screens 12 to prevent supplementing material 2 from unintentionally dropping over the sides of the conveying part 6 and/or supply unit 10, and/or to facilitate that the conveying unit may transport a larger amount of supplementing material 2, as illustrated e.g. in fig. 1a.

Likewise, the conveying unit 5 may comprise one or more end screens (not illustrated) arranged at the upper end of the conveying part 6 to prevent that the supplementing material 2 is thrown to far and hereby is not loaded into the storage 4a of the material distributing unit 4.

In an embodiment of the invention, the conveying unit 5 comprises a roofing (not illustrated in any drawing) arranged over the conveying means 7 and/or the further conveying means 11. This facilitates that the supplementing material 2 on the conveying unit 5 is not getting wet if it rains (to prevent the supplementing material 2 from e.g. sticking together), and/or is blown away if there is a strong wind blowing. Hereby the conveying unit 5 may be used during more extreme weather conditions whereby it is possible to distribute the supplementing material 2 during such weather conditions.

In an embodiment of the invention which is not illustrated, the conveying unit 5 comprises one or more e.g. hydraulic driven support legs which may be used for lifting and/or lowering the conveying unit 5 when the conveying unit 5 is coupled to and from a tow bar or the like.

As mentioned earlier, the conveying unit 5 may comprise a draw bar 19 (e.g. connected to the bottom frame 8) which may be coupled to e.g. a tow bar of a vehicle when the conveying unit 5 is transported from one location to another. In an embodiment, the draw bar 19 may be displaceable in the horizontal and/or vertical plane to facilitate that the material carrier 3 may be arranged close enough to the conveying unit 2 to load supplementing material 2 directly onto the conveying part 6 (or supply unit 10 if present) without the draw bar being in the way of the material carrier 3.

The conveying part 6, side screens 12, supply unit 10, bottom frame 8 and other parts of the conveying unit 5 may be made of stainless steel, iron, aluminium, other metal alloys, composite materials, plastic materials or the like or any combination of these materials. Further, the parts of the conveying unit 5 may be painted to prevent corrosion.

It is further preferred that the conveying unit 5 at least in the individual configuration of the conveying unit 5 comprises statutory light and other statutory demands to facilitate that the conveying unit may legally be transported on public roads, e.g. as a trailer.

Fig. 1a illustrates an embodiment of the invention, wherein the conveying unit 5 comprises conveyer cleaning means 17 for cleaning the surface of the conveying means 7 of the conveying part 6. It is of cause understood that the further conveying means 11 of the supply unit 10 may also be cleaned by conveyer cleaning means (not illustrated). The conveyer cleaning means 17 may comprise one or more rotating (as illustrated) or non-rotating brushes, it may comprise scraping means such as one or more plates/knives arranged to scrape the surface of the conveying means 7 and/or further conveying means 11, it may comprise flushing/cleaning the conveying means 7/further conveying means 11 with water and/or pressurized air, or it may comprise any other cleaning means and/or any combination of cleaning means 17 suitable for cleaning the conveying means 7 and/or further conveying means 11.

In an embodiment of the invention, the conveyer cleaning means 17 may be manually or automatically adjusted to compensate for wear on the conveyer cleaning means 17, e.g. brush(es) or scraping means as explained above.

Further, fig. 1a indicates the height h1 of the upper part of the conveying part 6 when arranged to transport supplementing material 2 to the material distributing unit 4. The height h1 is preferably between 3 meters and 6 meters, such as between 3,5 meters and 5 meters, e.g. 4 meters.

Fig. 1b illustrates the conveying part 6, and indicates an example of the width W1 of the conveying part 6 which preferably is between 1 meter and 3,5 meters, e.g. between 2 and 3 meters e.g. 2,5 meters.

Fig. 1c illustrates an embodiment of the conveying unit 5 seen from above. This embodiment illustrates an example of the conveying means 7, 11 comprising cleated conveyers as described earlier.

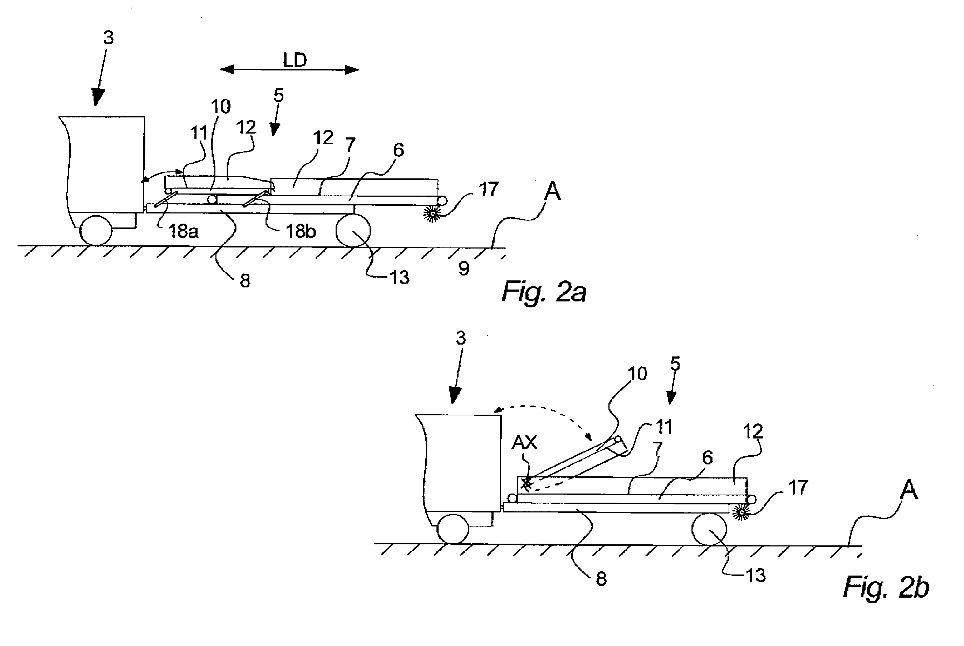

Fig. 2a and 2b illustrates embodiments of the invention wherein the supply unit 10 can be arranged at least partly above the conveying part 6 when the conveying unit 5 is arranged to be transported from one location to another, e.g. by means of a tow bar of a heavy vehicle.

In fig. 2a, the conveying unit comprises one or more pairs of pivotable members 18a, 18b connected to the conveying part 6 and supply unit 10. These members 18a, 18b may be displaced in the longitudinal direction LD of the conveying unit 5 to be arranged substantial parallel with and above (or below) the conveying part 6 (which preferably during transport of the conveying unit 5 is arrange substantially parallel to the horizontal plane) to achieve a more space saving and transportation friendly conveying unit 5.

In fig. 2b, the supply unit 10 can be pivoted around a horizontal axis AX to be arranged above the conveying unit 10 during transportation of the conveying unit 5.

It is of cause understood that the supply unit 10 in other embodiments of the invention may be decoupled from / removed from the conveying unit 5 to be transported separately or arranged somewhere on the conveying unit 5 during transportation.

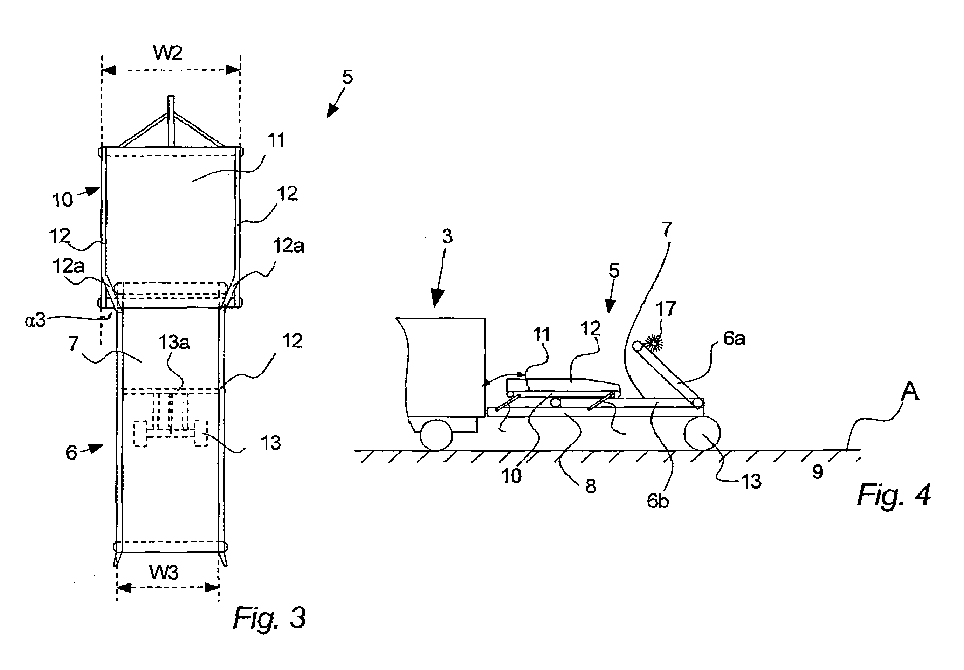

Fig 3 illustrates an embodiment of the invention wherein the supply unit 10 has a width W2 which is larger than the width W3 of the conveying part 6. The width of the supply unit 10 in this embodiment may e.g. be between 1.5 and 5 meters such as between 2.5 meters and 4 meters, e.g. around 3.5 meters. While the width W2 of the conveying part may be e.g. between 1 meter and 3.5 meters, e.g. between 2 meters and 3 meters e.g. 2.5 meters. This facilitates that the supply unit 10 may act as an advantageous larger intermediate storage for temporarily storing supplementing material 2 compared to if the width of the supply unit 10 and the conveying part 6 is substantially the same. If the supply unit 10 has a width W2 which is larger than the width W3 of the conveying part 6, it is preferred that the side screens 12 of the supply unit 10 and/or the conveying part 6 are adapted to each other, e.g. by arranging a part of side screens 12a in an angle α3 to the longitudinal direction of the conveying unit 5.

Fig. 4 illustrates an embodiment of the invention wherein the conveying part of the conveying unit 5 is foldable into two parts 6a, 6b, so that a first part 6a of the foldable conveying part may be folded/pivoted to be arranged above a second part 6b of the foldable conveying part. This facilitates a more space saving conveying part 6 and hereby a more space saving conveying unit 5 during transportation of the conveying unit 5

In an embodiment of the invention the material distributing unit 4 comprises weight transferring means such as a piston/actuator transferring the shaft pressure from a front shaft to a rear shaft of the top dressing unit to distribute the weight of the topdressing unit onto the vehicle (not illustrated) dragging/pulling the material distributing device 4. This is especially advantageous if the material distributing unit 4 is an individual distributing unit configured for being connected to and dragged by a vehicle, e.g. by a tow bar.

Likewise, in an embodiment of the invention, the material distributing unit 4 (in this case preferably a trailer configured for being dragged by a vehicle) may comprise one or more horizontal rotatable wheel shafts rotatable so that when a vehicle dragging the material distributing unit 4 turns, the shaft and hereby the wheels turns with the vehicle. This spares the ground surface area A compared to material distributing units not comprising rotatable shafts, since the wheels does not slide over the surface A during turn of the vehicle dragging the material distributing unit 4.

In an embodiment of the invention, the material distributing unit and/or the conveying unit comprises more than one pair of wheels, such as two, three or four pair of wheels.

In an embodiment of the invention, the storage compartment 4a of the material distributing unit may be tilted and/or sidewalls of the storage compartment may be temporarily removed/ displaced to lower the inlet of the storage compartment 4a.

In an embodiment of the invention, the topdressing unit 4 may comprise one or more shock absorbers, feathering means such as leaf springs, coil springs, hydraulic springs/ cylinders or the like for further sparing/protection of the ground surface area A during transportation of the conveying unit 5 and/or during transportation of supplementing material 2 by means of the conveying unit.

In an embodiment of the invention, the distribution of the supplementing material may be performed based on a position system such as a Global Navigation Satellite System (GNNS) such as the Global Positioning System (GPS), the navigation system named Galileo or the like, e.g. to automatically and/or manually adjust the amount of supplementing material 2 distributed per square metre of the ground surface area A. Likewise, cell phone network(s) may be used for positioning.. This facilitates that the supplementing material distribution may be performed more cost efficient and in a more effective way. In this embodiment the material distribution unit 4 may at least partly be controlled by control means receiving position information comprising the position of the material distributing unit. The supplementing material 2 may further in an embodiment be distributed based on a map, look up table or the like comprising information regarding how much and/or which supplementing material or mix of supplementing materials (e.g. a mix of a certain amount of fertiliser mixed with a certain amount of soil and/or seed) should be distributed at specific ground surface area locations of the ground surface area A, to achieve a more effective and optimal distribution of supplementing material 2. It is understood that the map, look up table or the like may be premade before distributing the supplementing material, and/or it may be made during the distribution of supplementing material.

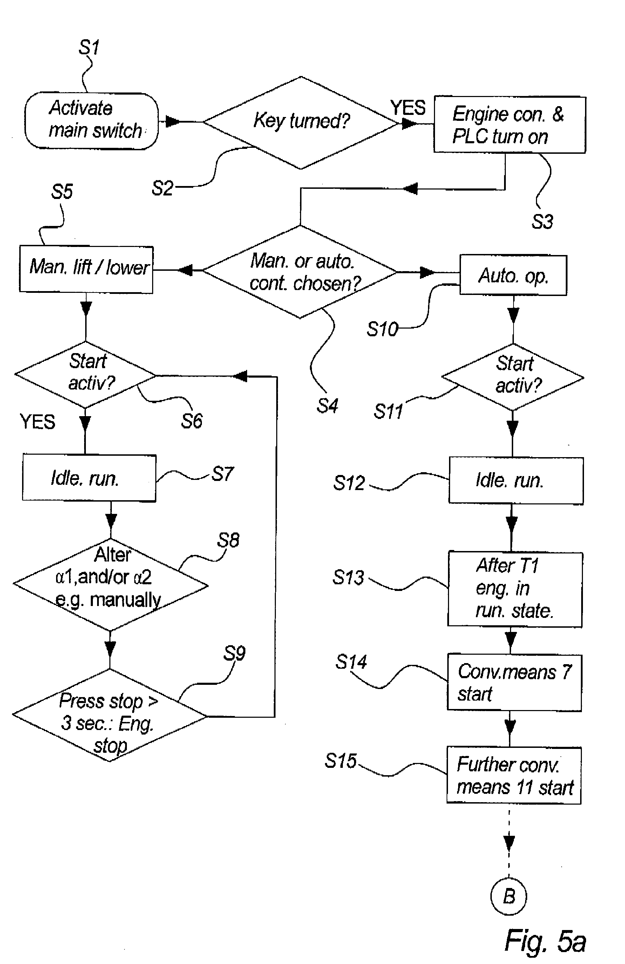

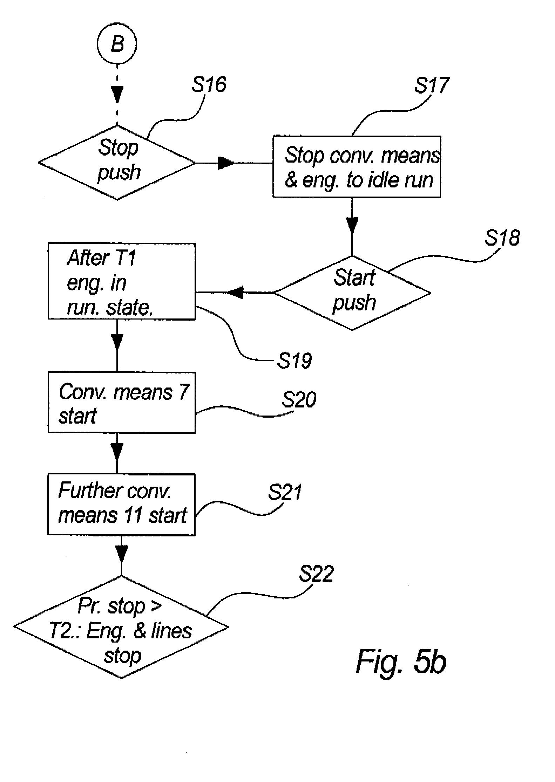

Fig. 5a and 5b illustrates one scenario of one way of controlling the conveying unit according to an embodiment of the invention.

Turning to fig. 5a, S1 comprises the step of activating a main switch of the conveying unit 5 manually by a button on the control means 14, on a remote control 15 or the like.

In step 2 it is tested if a key has been turned/ activated by an operator as a safety precaution. If the key has been turned, the electrical system (e.g. comprising a PLC (programmable Logic Controller)), means for controlling engines (e.g. a hydraulic pump) and hydraulic systems of the conveying unit is activated in step S3. Then it is in step S4 tested if manual or automatic control of the conveying unit 5 is chosen.

If manual control is chosen, an operator may in step S5 manually lift or lower the bottom frame 8 (and hereby the conveying unit 5) to support on the ground. It is of cause understood that this in other examples may be achieved/performed by means of the control means 14 and/or a remote control 15 controlling drive means for lifting/lowering the bottom frame 8

Then the operator may in step 6 may activate a start button, and if this button is pressed, relevant engines drive means may in step S7 be started in an idling mode, e.g. engines/drive means for hydraulic pressure, drive means for driving the conveying means 7 and/or further conveying means 11 and/or drive means for conveyer cleaning means 17. If the start button is activated, a warning sound and/or light such as rotating light (if present) may further be activated.

Then the operator may in step S8 by means of the control means 14, a remote control 15 and/or by manual means such as one or more crank handles adjust the inclining angles α1, α2 of the conveying part 6 and/or supply unit 10.

The operator may now by means of the control means 14 and /or one or more remote controls 15 start/stop, increase/ decrease speed and the like of the conveying means 7 and or further conveying means 11 to transport/convey the supplementing material 2 supplied to/ loaded on the conveying unit 5 by the material carrier 3 to the storage compartment(s) 4a of the material distributing unit 4.

In an embodiment of the invention, if a stop button (step S 9) is activated, engines/ drive means and the like are stopped preferably after a time interval such as e.g. 3 seconds.

If instead automatic mode (in step S4) is chosen, the control of the conveying unit 5 enters in step S10 an automatic mode.

In automatic mode the operator may in step S11 activate a start button, and if this button is pressed/activated, relevant drive means may in step S12 be started in an idling mode as described in step S7.

Then, in step S13, after a predetermined time interval T1, the relevant drive means/engines switches from idling state to running state. Hereafter, the conveying means 7 (in step 14) and the further conveying means 11 (in step 15) if a supply unit 10 is present, starts running to transport supplementing material 2.

Turning to fig. 5b (a continuation of the diagram in fig 5a), if a stop button in step S16 is pushed (on the control means 14 and or on a remote control 15), the conveying means 7and the further conveying means 11 in step S 17 is stopped and returns to an idling mode. The conveying means 7 and the further conveying means 11 may be started and stopped again (as illustrated in Steps S18, S19, S20, S21) by pressing a start button (e.g. the start button referred to in step S6 in manual mode) controlling start/stop of the conveying means 7, 11.

In an embodiment of the invention, if a stop button is activated/pressed for a predetermined amount of time T2 (step S22) such as e.g. 3 seconds, the driven means etc. is stopped.

It is of cause understood that the example in fig 5a and 5b may be altered in a multitude of ways, that at least some of the steps/actions/tests may be optional and/or may be replaced with other steps/actions/tests. Likewise it is preferred that when some drive means, actuators, conveying means and the like of the conveying unit are started/activated, safety measures comprising warning sounds, rotating light and/or the like is activated to inform the operator and nearby persons that the conveying unit 5 in operation.

In general, if an emergency stop (if present) of the conveying unit 5 is activated, all moving parts, hydraulics, the electrical system and/or the like will be stopped/tuned off in accordance with present statutory laws.

Further, the conveying unit may comprise reset means such as a reset button. These reset means may be configured for resetting moving parts, hydraulics, the electrical system and/or the like if a fault has occurred or the emergency stop has been activated.

Preferably, an short activation (e.g. below the time T2) of a stop button will stop the conveying means 7, 11 and put drive means into an idling state as explained in relation to step 17.

In general, it is preferred that if the conveying is set to manual mode (S4), and a start button is activated, drive means such as an engine for the hydraulic pressure and other is started. If the conveying is set to automatic mode (S4), and a start button is activated, the process described in relation to step 10-22 is started.

It will be understood that the invention is exemplified above and in the drawings comprising examples of components, materials, embodiments of the invention, examples of dimensions, speed examples of conveyer means and the like, but it is understood that the invention is not limited to these particular examples above but may be designed in a multitude of varieties within the scope of the invention as specified in the claims.

### List

- 1.: System for transport of supplementing material.
- 2.: Supplementing material.
- 3.: Material carrier for carrying supplementing material.
- 3a.: Storage compartment of Material carrier for storing supplementing material to be supplied to the conveying unit.
- 4.: Material distributing unit for distributing supplementing material.
- 4a.: Storage compartment of material distributing unit for storing supplementing material.
- 5.: Conveying unit for receiving supplementing material from material carrier.
- 6.: Conveying part of conveying unit.
- 7.: Conveying means of conveying unit.
- 8.: Bottom frame of conveying unit.
- 9.: Inclination adjustment means for adjusting the inclining angle of the conveying part.
- 10.: Supply unit for receiving said supplementing material from said material carrier.
- 11.: Further conveying means of the supply unit.
- 12.: Side screen of supply unit and/or conveying part.
- 12a: Side screens arranged in an angle to the longitudinal direction of the conveying unit.
- 13.: Wheels to carry the conveying unit at least during transportation of the conveying unit.
- 13a: Wheel supporting structure.
- 14.: Control means.
- 15.: Remote control.
- 16.: Parts/pieces (cleats) projecting from the conveying means e.g. perpendicular or in an angle to the transportation direction of the conveying means
- 17.: Conveyer cleaning means for cleaning the surface of the conveying means of the conveying part
- 18a, 18b: Pairs ofpivotable members connected to conveying part and supply unit.
- 19.: Draw bar (e.g. displaceable) for drawing the conveying unit during transportation of the conveying unit.
- α1: inclining angle of conveying part
- α2: inclining angle of supply unit less than the inclining angle of the conveying part
- α3: Angle in relation to the longitudinal direction of the conveying unit of side screen(s) 12a.
- A: Ground surface area.
- h1: Height of upper part of conveying part when arranged to transport supplementing material.
- AX: Horizontal axis which the supply unit may be pivoted to be arranged above the conveying unit.
- W1: Width of supply unit.
- W2: Width of conveying part.
- W3: Width of conveying part in embodiment comprising a wider supply unit.
- LD: Longitudinal direction of conveying unit.
- S1-S22: Steps in example of control of system/conveying unit according to an embodiment of the invention

## Claims

1. A system (1) for transport of supplementing material (2) such as top-dressing material, filling material, smoothing material or the like on a ground surface area (A) from a material carrier (3) for carrying and supplying said supplementing material (2), to a material distributing unit (4) such as a topdressing unit for distributing said supplementing material (2) on at least a part of said ground surface area (A), where said system (1) comprises a conveying unit (5) for receiving supplementing material from said material carrier (3), said conveying unit (5) comprising:
a conveying part (6) comprising conveying means (7), wherein said conveying part (6) can be arranged in an inclining angle (α1) in relation to the horizontal plane to transport said supplementing material (2) in an inclining angle (α1) in relation to the horizontal plane to supply said supplementing material (2) to said material distributing unit (4).

2. A system (1) according to claim 1, wherein said convoying unit (5) is configured to be an individual conveying unit (5), possibly comprising drive means to move said conveying unit (5) on said ground surface area (A).

3. A system (1) according to claim 1 or 2, wherein said conveying unit (5) is arranged on said material distributing unit (4) or on said material carrier (3).

4. A system (1) according to any of the preceding claims, wherein said conveying unit (5) comprises a bottom frame (8) supporting said conveying unit (5), said bottom frame (8) being configured for being lowered to support on said ground surface area (A) when said conveying unit (5) is arranged to transport said supplementing material (2), and
wherein said bottom frame (8) and/or said conveying part (6) comprises inclination adjustment means (9) for adjusting said inclining angle (α1) of said conveying part (6) in relation to the horizontal plane.

5. A system (1) according to any of the preceding claims, wherein said conveying unit (5) comprises a supply unit (10) for receiving said supplementing material (2) from said material carrier (3), which supply unit (10) comprises further conveying means (11), said supply unit (10) being configured for feeding said supplementing material (2) to said conveying part (6), and
wherein said supply unit (10) is configured for facilitating an intermediate storage of said supplementing material (2).

6. A system (1) according to claim 5, wherein said supply unit (10) is configured for being arranged with an inclining angle (α2) less than said angle (α1) of said conveying part (6).

7. A system (1) according to claim 5 or 6, wherein said supply unit (10) is arranged together with said conveying part (6) and is configured to be arranged substantially parallel with and/or above of said conveying part (6) during transport of said conveying unit (5)

8. A system (1) according to any of the preceding claims, wherein said conveying unit (5) comprises wheels (13) to carry said conveying unit (5) at least during transportation of said conveying unit (5).

9. A system (1) according to any of the preceding claims, wherein said conveying part (6) is foldable, comprises drive means, and/or comprises conveyer cleaning means.

10. A method of applying supplementing material (2) such as top-dressing material, filling material, smoothing material or the like on a ground surface area (A) by means of a conveying unit (5), said method comprising the steps of:
providing a material carrier (3) and a conveying unit (5) comprising at least one conveying part (6), said at least one conveying part (6) comprising conveying means (7),
supplying said supplementing material (2) from said material carrier (3) to said conveying unit (5), and
conveying said supplementing material (2) from said material carrier (3) by means of said conveying means (7) of the conveying part (6) to a material distributing unit (4) for distributing said supplementing material (2) to said ground surface area (A).

11. A method according to claim 10, wherein said step of supplying said supplementing material (2) from said material carrier (3) to said conveying unit (5) comprises the step of loading said supplementing material (2) on a supply unit (10) comprising further conveying means (11), from which said supplementing material (2) is conveyed to said conveying part (6).

12. A method according to claim 11, wherein said supply unit (10) serves as an intermediate storage of said supplementing material (2).

13. A method according to claim 11 or 12, wherein said supply unit (10) is arranged substantially parallel with and/or on top of said conveying part (6) during transportation of said conveying unit (5).

14. A method according to any of claims 10-13, wherein said conveying unit (5) in a prior step is lowered, e.g. to support on the ground such as on said area (A), for example by displacing one or more wheels (13) carrying said conveying unit (5) at least during transportation of said conveying unit (5).

15. A method according to any of claims 10-14, wherein said conveying part (6) is arranged in an inclining angle (α1) in relation to the horizontal plane.
